# EUROPEAN PATENT APPLICATION

(11) **EP 2 978 116 A1**
(43) Date of publication of application: **27.01.2016**
(21) Application number: 14178029.6
(22) Date of filing: 22.07.2014
(51) Int. Cl.: H02M 1/32, H02M 1/36, H02M 3/158, H02H 7/12

(54) **DC/DC converter circuit**

(71) Applicant: Delphi International Operations Luxembourg S.à r.l., 4940 Bascharage (LU)
(72) Inventor: Trommer, Frank O., 51588 Nuembrecht (DE)
(74) Representative: Neill, Andrew Peter

(57) **Abstract**

A circuit (1) adapted to provide two different voltage levels to components of a system comprising a DC/DC converter (5) located between a first voltage supply (2b) and a second higher voltage supply (2a), said DC/DC converter (5) comprising a first high-side semiconductor switch (6) arranged in series with said power supplies (2a,2b), and a second low-side semiconductor switch (7) connected to ground (GND), and comprising a protection relay (9) located between the low voltage supply (2b) and the DC/DC converter (5).

## Description

### Field of the Invention

This disclosure relates to systems which use DC/DC converters to supply, for example, two different voltage levels to system components and devices. Aspects have particular, but not exclusive application, to vehicle electrical systems where vehicle components and sub systems may be provided with and/or utilize different voltage levels

### Background of the invention

Nowadays vehicle systems may utilize a dual voltage DC/DC converter so as to provide a lower voltage e.g. 12V supply and a higher voltage supply (e.g. 24V or 48V and higher). In order to provide reverse polarity protection and single failure protection, it is known to utilize a MOSFET pair in an antiparallel arrangement for DC/DC converter applications.

It is an object of the invention to provide an improved alternative to the MOSFET pair which is cheaper and uses less power.

### Statement of the Invention

In one aspect is provided a circuit adapted to provide two different voltage levels to components of a system comprising a DC/DC converter located between a first voltage supply and a second higher voltage supply, said DC/DC converter comprising a first high-side semiconductor switch arranged in series with said power supplies, and a second low-side semiconductor switch connected to ground, and comprising a protection relay located between the low voltage supply and the DC/DC converter.

The circuit may be adapted to detect if there is a short circuit in said first semiconductor switch when said relay is in a closed state, and adapted to turn on said second semiconductor switch, on detection of said short circuit.

The circuit may be adapted to open said relay after said second semiconductor switch is turned on.

The circuit may be adapted to turn off said second semiconductor switch upon opening of said relay.

The circuit may including measurement means adapted to measure current between the relay and the DC/DC converter and/or the voltage on the high/low voltage side of the DC/DC converter to determine if there is short circuit.

The circuit may be adapted to determine the voltage or current on the high voltage or low voltage side of the DC/DC converter or the duty cycle level, and to determine if said voltage/current/duty cycle level is within a predetermined range or achieves a certain pre-set value, and if so, to open or close said relay.

The circuit may include means to switch on said relay after a predetermined time delay after said DC/DC converter is switched on, or is switched to supply voltage/current to provide low voltage supply and/or current for loads.

The circuit may include means to switch off said relay after a predetermined time delay after said DC/DC converter is switched off.

The relay may be adapted to be switched off during a ramping up/down operation.

The semiconductor switches may be MOSFETs or IGBTs.

In another aspect is provided a method adapted to be performed on such circuits comprising detecting if there is a short circuit in said first semiconductor switch when said relay is in a closed state, and turning on said second semiconductor switch, on detection of said short circuit.

The relay may be opened after said second semiconductor switch is turned on.

The second semiconductor switch may be turned off upon opening of said relay.

The method may including measuring the current between the relay and the DC/DC converter and/or the voltage on the high/low voltage side of the DC/DC converter to determine if there is short circuit.

The method may comprise determining the voltage or current on the high voltage or low voltage side of the DC/DC converter or the duty cycle level, and determining if said voltage/current/duty cycle level is within a predetermined range or achieves a certain pre-set value, and if so, to open or close said relay.

The method may comprise switching on said relay after a predetermined time delay after said DC/DC converter is switched on, or switched to supply voltage/current to provide low voltage supply and/or current for loads.

The method may comprise switching off said relay after a predetermined time delay after said DC/DC converter is switched off.

Said switching of said relay may be performed during a ramping up/down operation.

### Brief Description of the Drawings

The invention will now be described with reference to the following drawings of which:
Figure 1 shows circuitry typically used in vehicle systems to provide two levels of power supply (e.g. 48V and 14V) to vehicle components using a DC/DC converter;
Figure 2 shows a circuit according to one aspect of the invention;
Figure 3, 4 and 5 show the normal operation of the DC/DC converter;
Figure 6 shows a circuit according to a further aspect of the invention;
Figure 7 illustrates the timing of control of circuitry with respect to switching off the relay during a short circuit of a HS MOSFET in failure mode according to one aspect of the invention;
Figure 8 shows a flowchart of the methodology that can be applied to the figure 3, 4 and 6 circuitry.
Figures 9 and 10 both show the timeline of operation and duty cycle in one embodiment where a soft start is described and the timing of the relay when to switch on.

### Detailed Description of Examples

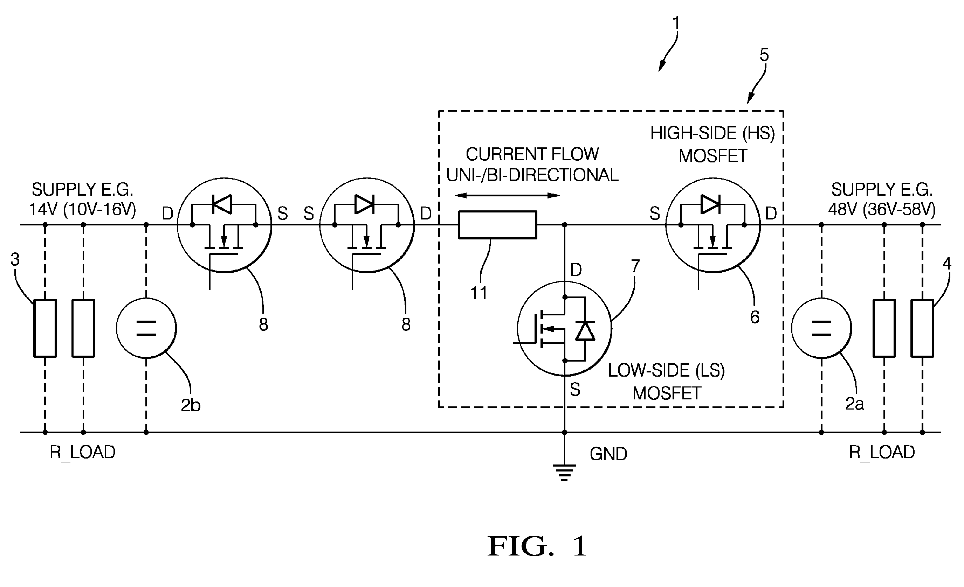

Figure 1 shows circuitry 1 typically used in vehicle systems to provide two levels of power supply (e.g. 48V and 14V) to vehicle components. The system may include one or more power supplies 2a and 2b one of which one (2b) may be a low voltage supply and the other of which (2a) may be a high voltage supply. The power supplies provide power to components/devices 3 and 4 which require/operate at respective low and high voltages.

A DC/DC converter (single or multi-phase) 5 is located between the power supplies and is adapted to convert high voltage to low voltage and low voltage to high voltage. The DC/DC converter may be single or multiphase and typically includes a high side (HS) MOSFET 6 located between serially between the power supplies together with an inductor 11 and a low side (LS) MOSFET 7 located to ground. Alternatively IGBT or diodes may be used (instead of (e.g. low-side) MOSFET).

Two anti-parallel arranged MOSFET 8 are located between the converter and the low side voltage which prove circuit protection from reverse polarity and single failure.

### Detailed Description of the Invention

In a general aspect of the invention, a relay is used instead of the MOSFET anti-parallel pair in conjunction with control of the DC/DC converter MOSFETS to protect from short circuits and other problems that may lead to component wear.

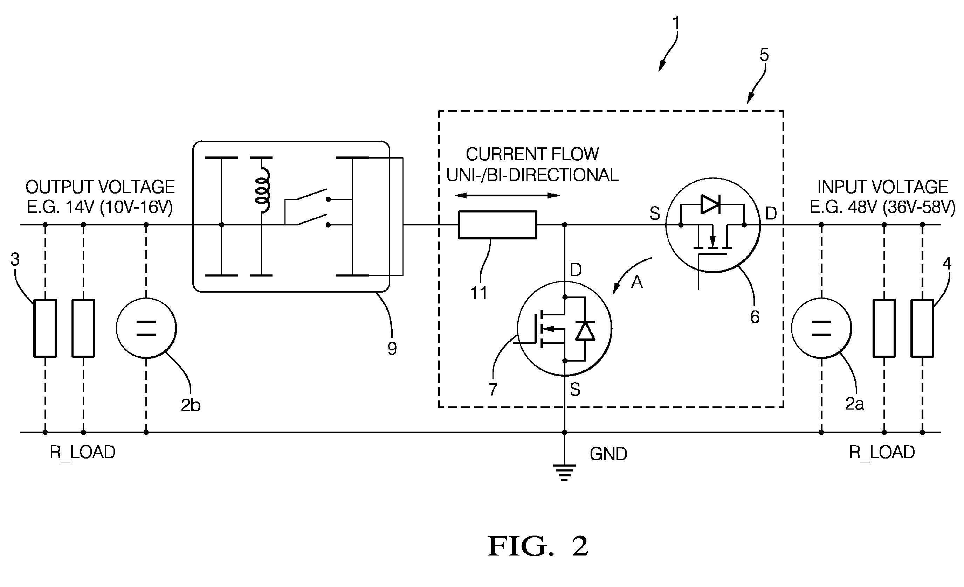

Figure 2 shows a circuit according to one aspect of the invention. It is similar to the one described in figure 1. The anti-parallel arranged protection MOSFETs have been replaced with a relay 9 which in the example is a 12 volt relay. Again the DC/DC converter is shown by the outline broken line. The converter as before includes a high-side MOSFET and a low-side MOSFET and an inductor 11. The relay provides reverse polarity protection and single failure protection including protection against short circuits or failures in converter LS and HS MOSFETs. The advantage of a relay is reduced power consumption and lower cost.

### Operation

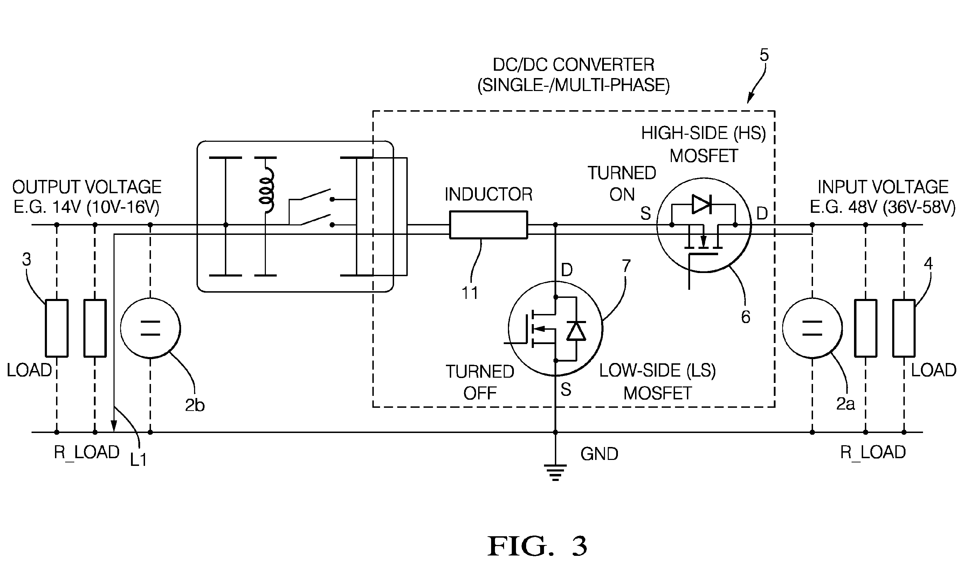

In normal operation, as mentioned the HS MOSFET and LS MOSFETS are alternately in an ON/OFF state to allow DC-DC conversion. The duty cycle, that is the operation of the converter, can be controlled by e.g. a micro-controller. The operation of the DC/DC converter will now be described with reference to figures 3, 4 and 5.

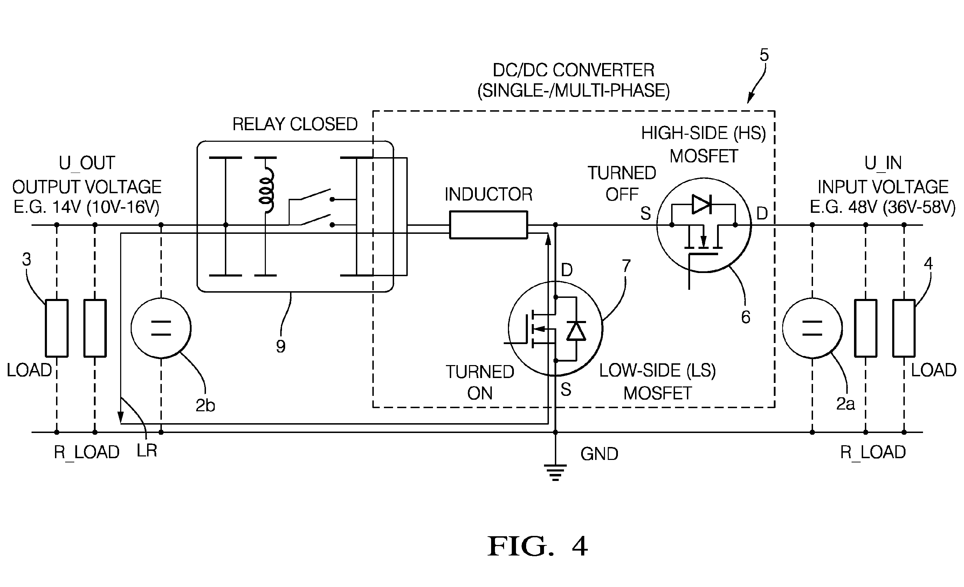

In normal operation the high-side and low-side MOSFET are turned on and off alternately with frequencies in the kHz range). The high-side MOSFET is turned on while the low-side MOSFET is turned off with a certain duty cycle according to the high voltage status and the expected low voltage value. Therefore the duty cycle determines the voltage ratio between both voltages. In essence, the formula for the duty cycle = output voltage / input voltage (e.g. 12 V / 48V = 25 %). When the high side MOSFET is ON (and the low side MOSFET is OFF), current flows as shown by line L1 as shown in figure 3 from high voltage to low voltage side to either e.g. load a battery or a dual layer capacitor or to supply the loads. When the high-side MOSFET is turned off and the low-side MOSFET is turned on (in some cases the low-side MOSFET can also be replaced by a power diode depending on current amount and power dissipation) with a certain duty cycle according to the high voltage status and the expected low voltage value. Current flow along path L2 shown in figure 4 is continuing through the inductor to low voltage side to either load e.g. a battery or a dual layer capacitor or to supply the loads.

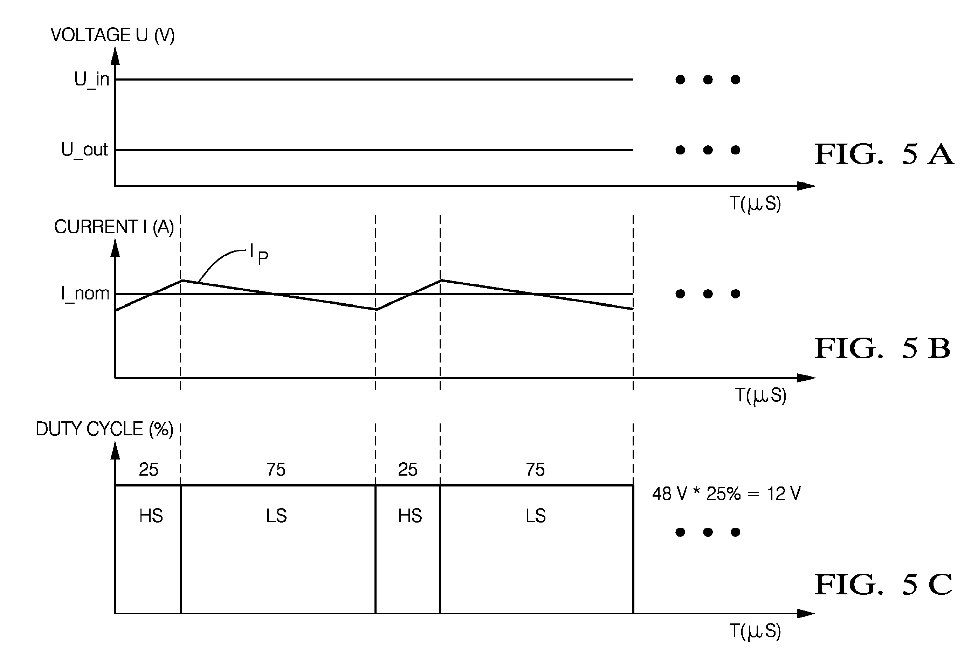

Figure 5. Figure 5a shows the high and low voltages, figure b shows the current Ip at point P on figure 2 and figure 5c shows the duty cycle and switching of HS and LS MOSFETS to provide 25% of 48V (high side supply) which is 12V.

However there are a number of problems which may arise when using a relay. It is a further object of the invention to overcome such problems. Also in order to protect the relay and extend its life, it is important to avoid switching a low voltage (e.g. 12V) relay on and off at high currents and/or high voltage.

### Short Circuit Strategy

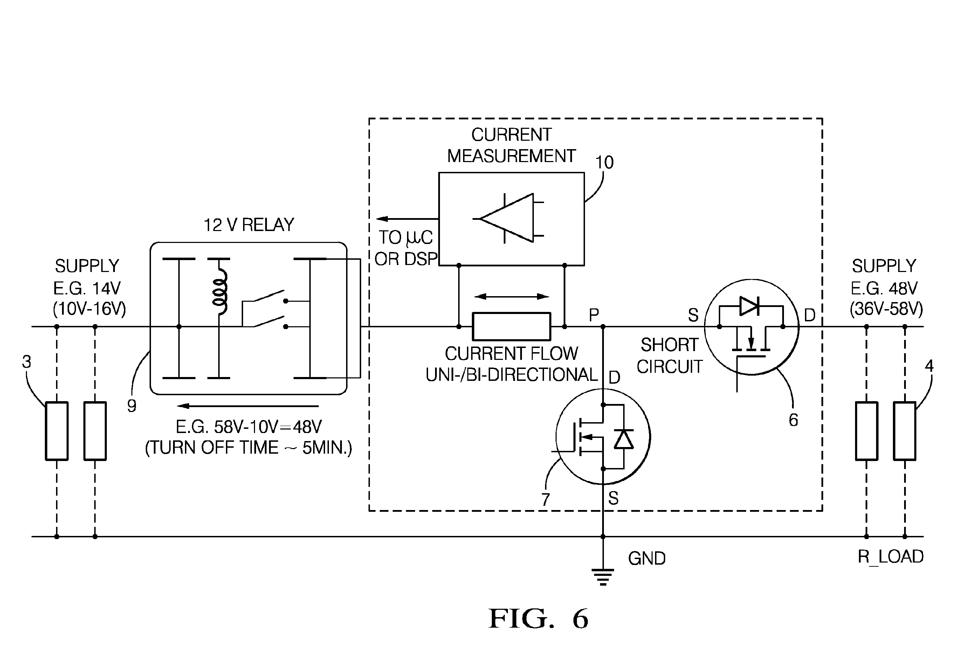

Figure 6 shows a circuit similar the one described in figure 2. The anti-parallel arranged protection MOSFETs have been replaced with a relay which in the example is a 12 volt relay. Again the DC/DC converter is shown by the outline broken line. The converter as before includes a high-side MOSFET 6 and a low-side MOSFET 7.

The converter includes current measurement means 10 to detect a short circuit current (e.g. in the HS MOSFET) for example via a shunt or inductor 11. This current detection means effectively signals the measured current to a microcontroller.

In normal operation, as mentioned the HS MOSFET and LS MOSFETS are alternately in an ON/OFF state to allow DC-DC conversion. The duty cycle, that is the operation of the converter, can be controlled by e.g. a micro-controller.
The microcontroller determines if there is a short circuit of the high-side MOSFET by for example determining if the measured current exceeds a threshold value. In this case the LS MOSFET is still in an off position in the duty cycle. The voltage at point P in figure 2 will also increase. If the current/voltage exceeds a threshold/limit, the LS MOSFET is turned on for a short period of time and/or until the relay is turned off. This may be for example 5 ms. (As the combined load resistance and relay resistance is much higher than the LS MOSFET resistance, the high current will flow through the LS MOSFET and less current will flow through the relay). As a result there will be no risk of arcing across the relay terminals due to the otherwise higher voltage build up at point P and/or the resulting higher current across the relay. The LS MOSFET is then turned off immediately after the relay is turned off. This can be done after a set time or when it is determined that the relay is turned off.

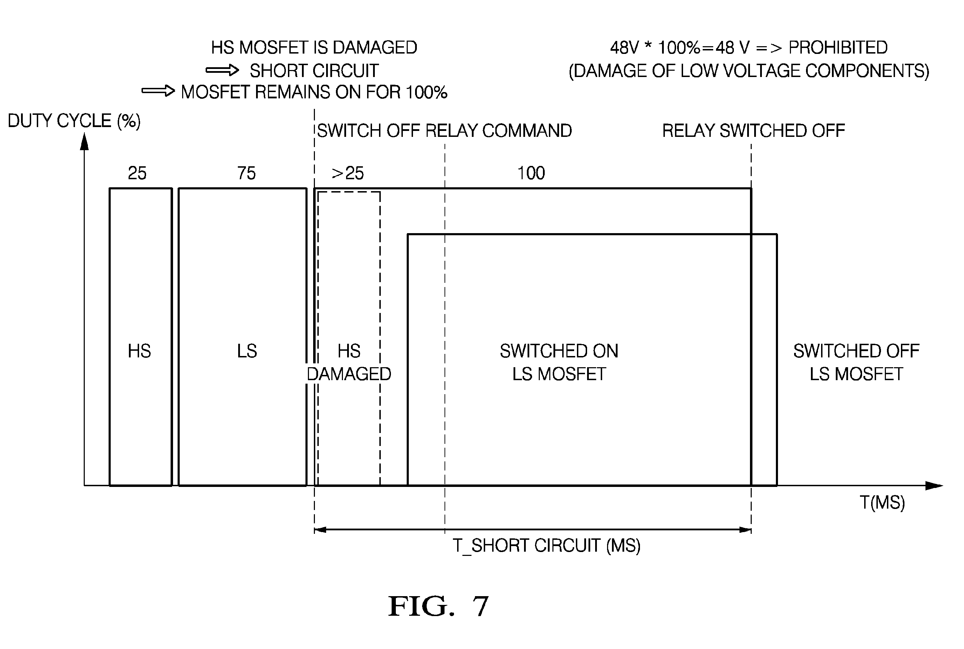

Figure 7 also illustrates the operation according to one example. The figure shows the timeline of operation with respect to the duty cycle that is the percentage of power that is demanded or provided with respect to that of the high voltage level. Initially operation is set at 25% duty cycle. Of the high-side MOSFET and the duty cycle increases steadily with a soft start until 25 % is reached. This means the high-side switch is turned on and off until 25 % duty cycle while the low-side MOSFET is turned on alternating for the remaining period of time. The high- side MOSFET is turned on / off and the low-side MOSFET is turned off / on according to the relay is in an "on" state.

A short circuit of the high-side MOSFET can arise any time during operation, especially in case of a thermal component stress or current peaks (when switching on or off additional low resistive or inductive loads). During short circuit of the high-side MOSFET the duty cycle increases directly to 100%. This results in an increase of the low voltage towards the high voltage. This would damage the 12V relay and would lead to arcing at turning off high voltage in combination with high current.
Shortly after this short circuit is detected on the HS MOSFET (e.g. damaged) the LS MOSFET is switched on to reduce the current flow through the relay, since the RDSon of the low-side MOSFET is small and the main current will flow through the low-side MOSFET. A command is then sent to open i.e. switch off the relay before the low voltage and short circuit current increases. The LS MOSFET which is switched on quickly (and before the relay is switched off), and is kept ON for a set time until the relay is switched off. Directly afterwards the low-side MOSFET is switched off as well.

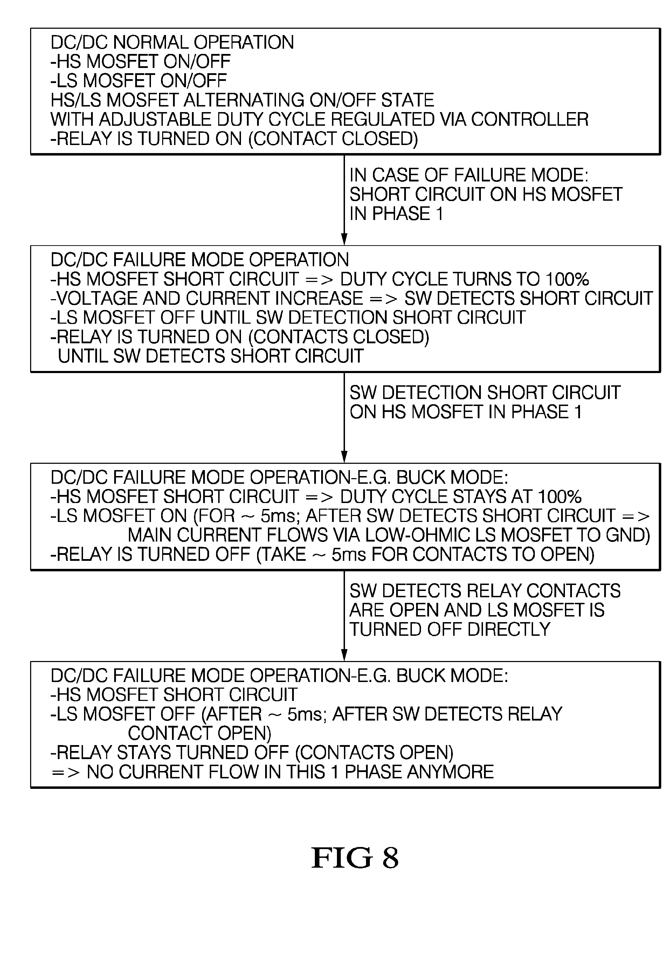

The general procedure is shown in the flowchart of figure 8.

Alternatively the system may have means or be adapted to determine the voltage at point P to determine if there is a short circuit, and the microcontroller determining if there is a short circuit if this measured voltage exceeds a threshold.

Such a mechanism provides effective protection of the relay and avoids switching off the relay at high currents / voltages to increase relay contact lifetime.

Thus in one aspect the strategy is to turn on the low-side MOSFET during short circuit of the high-side MOSFET (which normally needs to be avoided because the current will flow directly from 48V supply through the MOSFETs towards ground) for a very short time period in order to avoid the high current flow through the relay at high voltage which leads to arcing and damage or destruction of a 12V relay. This avoids high voltage at the low voltage side in order to prevent low voltage components to be damaged or destroyed at increased voltage. A short circuit of the high-side MOSFET can arise any time during operation, especially in case of a thermal stress or current peaks (when switching on additional low resistive or inductive loads)

### Relay Protection

In one aspect, during operation of the circuit, the relay is adapted to be switched on in normal operating mode when the voltage at point P is close to the voltage of the low power supply (e.g. 12 V/14V). This can be performed by determining or providing means to determine the voltage at point P (or the current in the direction A through the LS MOSFET). Such a circuit ensures that the relays terminals are e.g. closed when the voltage on the low side of the DC/DC converter high side is at or around the voltage of the low voltage supply, so as to prevent arcing of the relay contacts for example. Thus according to certain aspects, when switching on the relay it is ensured that the voltage on the low side of the DC/DC converter is not very low (e.g. zero) nor too high (e.g. around the voltage of the high voltage supply on the other side of the DC/DC converter).

In an embodiment a ramp up (soft start) approach is taken such that the current and/or voltage on the DC/DC side of the relay is allowed to be ramped up in the current phase before the relay is switched on.

Preferably the relay is switched on when the voltage at point P is close to the voltage of the low power supply (12 V/14V). This can be performed by determining or providing means to determine the voltage at point P. During soft start or normal operation there is no current flowing in the direction of A, except during short circuit of high-side MOSFET; the low-side MOSFET is switched on as a remedy according to one aspect).

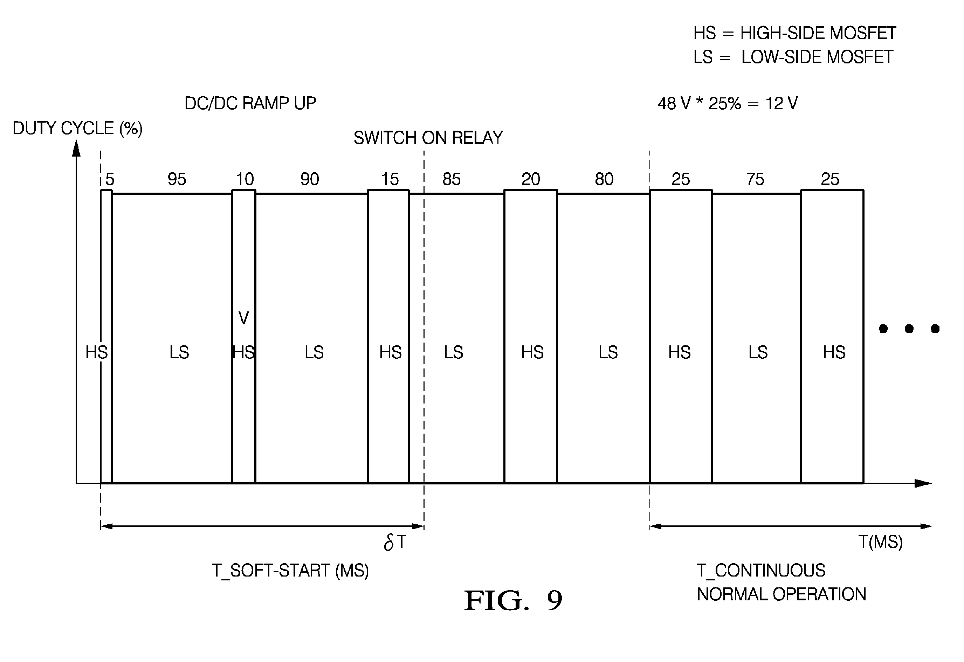

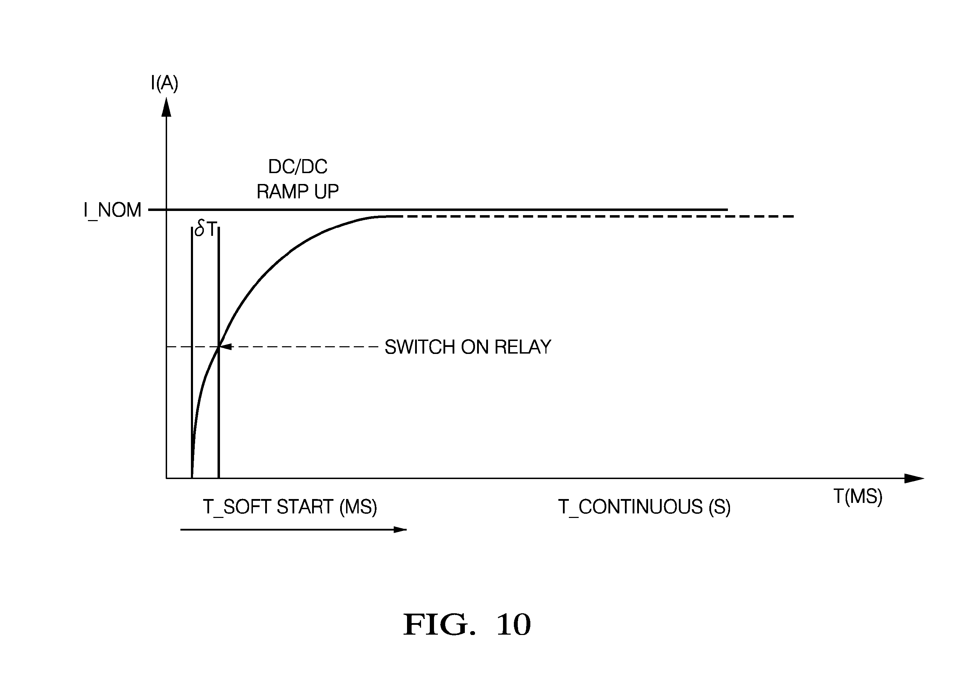

In a preferred embodiment the relay is switched on after a short time delay, dt, before the maximum current is reached. This ensures that switching on occurs at high current / voltage is avoided to increase relay life. This method is applied to e.g. the circuitry of figure 2. During "ramp-up" (soft start), the relay is turned on during ramp up of current (phase) after a short time delay before maximum current is reached. Figure 9 and 10 illustrate this. It is assumed the relay is in an open state. The y-axis shows the current flowing through both the high side and the low side MOSFETs alternating (see Figure 9) with the relay open when the DC/DC converter is being activated. The low side supply voltage is assumed to increase to 12 V. The voltage in the low side end of the DC/DC converter ramps up with the current and the relay is turned on before the current reaches the maximum normal operating (allowed) value. This can be after a pre-set time, δt, as shown in the figure 9 and 10. Alternatively the voltage/current at point P can be determined, and the relay switched on when a predetermined current or voltage is achieved. In such embodiments the DC/DC converter will have means to measure current or voltage at that point as shown in figure 6.

So there can be in examples measurement means adapted to measure current between the relay and the DC converter (i.e. the relay and the high- side path of the DC/DC converter (e.g. inductor or shunt) and/or the voltage on the high and /or low voltage side of the DC/DC converter to determine if there is short circuit.

The above embodiments result in far less stress for the relay and increases relay life time.

So figure 9 and 10 both illustrate an example during a soft start strategy. The relay is in an open state. Power is to be supplied to the high side and to the low side alternately through the DC/DC converter and the DC/DC converter is activated for this. The voltage on high side of the DC/DC converter is slowly ramped to 25% of duty cycle (see Figure 9) (i.e. up to the 12V required from the high voltage (48 V) side. This is achieved by sequentially increasing the duty cycle. When a certain % of duty cycle is reached (here approximately 15%) the relay is switched on. In practice the relay can be turned on at any suitable point during the ramp- up procedure. This in practice would depend on the requirement of a quick operational supply to the low side versus the improvement of switching on close to the low voltage level. Figure 10 shows the current flowing through point P and is ramped up partially before the relay is switched on. This is also representative of the voltage at point P.

The above mentioned strategies with regarding ramping up can also be used during "ramp-down" (soft stop) to avoid a voltage "peak" increase (similar to a load dump effect) at switching off the relay fast at high nominal current which has an impact on battery and relay life time and EMC behavior. In such embodiments the relay is switched off after a pre-set time or again when a certain voltage or current is achieved at the point P, or when a certain percentage other measure of the duty cycle is achieved.

## Claims

1. A circuit adapted to provide two different voltage levels to components of a system comprising a DC/DC converter located between a first voltage supply and a second higher voltage supply, said DC/DC converter comprising a first high-side semiconductor switch arranged in series with said power supplies, and a second low-side semiconductor switch connected to ground, and comprising a protection relay located between the low voltage supply and the DC/DC converter.

2. A circuit as claimed in claim 1 adapted to detect if there is a short circuit in said first semiconductor switch when said relay is in a closed state, and adapted to turn on said second semiconductor switch, on detection of said short circuit.

3. A circuit as claimed in claim 2 adapted to open said relay after said second semiconductor switch is turned on.

4. A circuit as claimed in claim 3 adapted to turn off said second semiconductor switch upon opening of said relay.

5. A circuit adapted as claimed in claim 2 including measurement means adapted to measure current between the relay and the DC/DC converter and/or the voltage on the high/low voltage side of the DC/DC converter to determine if there is short circuit.

6. A circuit as claimed in claim 1 adapted to determine the voltage or current on the high voltage or low voltage side of the DC/DC converter or the duty cycle level, and to determine if said voltage/current/duty cycle level is within a predetermined range or achieves a certain pre-set value, and if so, to open or close said relay.

7. A circuit as claimed in claimed in claim 1 including means to switch on said relay after a predetermined time delay after said DC/DC converter is switched on, or is switched to supply voltage/current to provide low voltage supply and/or current for loads.

8. A circuit as claimed in claimed in claim 1 including means to switch off said relay after a predetermined time delay after said DC/DC converter is switched off.

9. A circuit as claimed in claims 6 to 8 adapted such that said relay is adapted to be switched off during a ramping up/down operation.

10. A circuit as claimed in any preceding claim wherein said semiconductor switches are MOSFETs or IGBT.

11. A method adapted to be performed on the circuit of claim 1 comprising detecting if there is a short circuit in said first semiconductor switch when said relay is in a closed state, and turning on said second semiconductor switch, on detection of said short circuit.

12. A method as claimed in claim 11 wherein said relay is opened after said second semiconductor switch is turned on.

13. A method as claimed in claim 12 where said second semiconductor switch is turned off upon opening of said relay.

14. A method as claimed in claim 12 including measuring the current between the relay and the DC/DC converter and/or the voltage on the high/low voltage side of the DC/DC converter to determine if there is short circuit.

15. A method adapted to be performed on the circuit of claim 1 comprising determining the voltage or current on the high voltage or low voltage side of the DC/DC converter or the duty cycle level, and determining if said voltage/current/duty cycle level is within a predetermined range or achieves a certain pre-set value, and if so, to open or close said relay.

16. A method adapted to be performed on the circuit of claim 1 comprising switching on said relay after a predetermined time delay after said DC/DC converter is switched on, or switched to supply voltage/current to provide low voltage supply and/or current for loads.

17. A method adapted to be performed on the circuit of claim 1 comprising switching off said relay after a predetermined time delay after said DC/DC converter is switched off.

18. A method as claimed in claims 15 to 17 where said switching of said relay is performed during a ramping up/down operation.
